# EUROPÄISCHE PATENTSCHRIFT

(11) **EP 3 907 254 B1**
(45) Veröffentlichungstag und Bekanntmachung des Hinweises auf die Patenterteilung: **02.09.2026**
(21) Anmeldenummer: 20172893.8
(22) Anmeldetag: 05.05.2020
(51) Int. Cl.: C08L 7/00, C08L 9/00, C08L 9/06, B60C 1/00

(54) **SCHWEFELVERNETZBARE GUMMIERUNGSMISCHUNG**
SULPHUR LINKABLE RUBBER COATING MIXTURE
MÉLANGE D'ENGOMMAGE RÉTICULABLE AU SOUFRE

(43) Veröffentlichungstag der Anmeldung: 10.11.2021
(73) Patentinhaber: Continental Reifen Deutschland GmbH, 30175 Hannover (DE)
(72) Erfinder: EICHHORST, Christoph, 30419 Hannover (DE); PUPPA, Marion, 30419 Hannover (DE); KRAMER, Thomas, 30419 Hannover (DE); RECKER, Carla, 30419 Hannover (DE)
(74) Vertreter: Continental Corporation

(56) Entgegenhaltungen:
- EP-A1- 2 159 074
- EP-A1- 2 628 767
- EP-A1- 3 156 443
- EP-A2- 2 738 014
- DE-A1- 102011 055 966
- DE-A1- 102015 210 422
- DE-A1- 102015 210 424
- DE-A1- 102016 201 053
- DE-A1- 102018 209 559
- US-A1- 2016 052 340

## Beschreibung

Die Erfindung betrifft einen Fahrzeugluftreifen, der eine mit Schwefel vernetzte Gummierungsmischung für textile Festigkeitsträger, die zumindest ein Polyisopren, zumindest ein weiteres Dienelastomer aus zumindest einem konjugierten Dien und gegebenenfalls einer oder mehrerer vinylaromatischer Verbindungen mit einem Gehalt an vinylaromatischer Verbindung von 0 bis 50 Gew.-%, zumindest eine Kieselsäure, zumindest ein Silankupplungsagens und ein Haftsystem enthält, aufweist.

Häufig basieren schwefelvernetzbare Gummierungsmischungen für textile Festigkeitsträger auf einem Polymerverschnitt aus Naturkautschuk und Polybutadien. In schwefelvernetzbaren Kautschukmischungen, die als Gummierungsmischungen für textile Festigkeitsträger wie Rayon, Polyamid und Polyester verwendet werden, werden üblicherweise Haftsysteme wie z. B. so genannte Methylenakzeptor-Methylendonor-Paare eingesetzt, um zusätzlich zur Anbindung über das Schwefelnetzwerk eine Verbindung zur Haftimprägnierung des textilen Festigkeitsträgers, in der Regel ein RFL-Dip, zu erzielen. Der RFL-Dip beinhaltet Resorcin und Formaldehyd oder deren Vorkondensate.

Bei Reifen weisen Mischungen für die Gummierung textiler Festigkeitsträger in der Regel Ruß als preiswerten Füllstoff auf. Die Gummierungsmischungen müssen dabei eine ausreichende und haltbare Haftung zu den textilen Festigkeitsträgern gewährleisten, wobei die Haftung auch hohen dynamischen und thermischen Belastungen standhalten muss.

In den letzten Jahren gewinnt die Reduzierung des Rollwiderstandes von Reifen zunehmend an Bedeutung. Dabei ist es bekannt, den Reifen mit hysteresearmen und damit rollwiderstandsarmen Mischungen im Laufstreifen zu versehen. Zu den Maßnahmen, die zur Verringerung des Rollwiderstandes einer Kautschukmischung eingesetzt werden, gehört z. B. der Einsatz von Kieselsäure anstelle von Ruß als Füllstoff.

So offenbaren die EP 2159074 A1, die DE 10 2018 209559 A1, die EP 2 738 014 A2, die US 2016/052340 A1, die DE 10 2015 210424 A1, die EP 3 156 443 A1, die DE 10 2015 210422 A1 und die DE 10 2016 201053 Kautschukmischungen für Laufstreifen von Fahrzeugreifen, die spezielle Eigenschaften wie niedrigen Rollwiderstand und/oder niedrigen Abrieb und/oder guten Nassgriff aufweisen sollen.

In der DE 696 02 212 T2 hat man zur Reduzierung des Rollwiderstandes von Fahrzeugreifen vorgeschlagen, für die Gummierung der metallischen Festigkeitsträger des Gürtels eine Mischung einzusetzen, die Naturkautschuk und eine Kieselsäure mit einer spezifischen CTAB-Oberfläche von weniger als 125 m²/g enthält. Neben einer Reduzierung des Rollwiderstandes zeigt die Mischung auch eine verringerte Mooney-Viskosität im Vergleich zu Mischungen mit einer Kieselsäure mit einer größeren spezifischen Oberfläche.

In der DE 10 2011 053 450 A1 wird eine Kautschukmischung für die Gummierung von Festigkeitsträgern im Reifen, insbesondere metallischen Festigkeitsträgern, vorgeschlagen, die Naturkautschuk, Polybutadien und 55 phr der Kieselsäure Zeosil^{®} 1115 MP mit einer CTAB-Oberfläche von 105 m²/g enthält. Die Mischung weist eine verbesserte Beständigkeit gegen Rissbildung auf.

Die US 20100032071 A1 offenbart eine Kautschukmischung für die Gummierung der Karkasse eines Reifens, die Naturkautschuk, bis zu 30 phr eines Styrol-Butadien-Copolymers, bis zu 40 phr Kieselsäure und ein Silankupplungsagens enthält. Im Zusammenspiel mit anderen Mischungen im Reifen, soll sich der Reifen durch einen niedrigen Rollwiderstand bei hoher Reifenfestigkeit auszeichnen.

In der US 2008009570 A1 werden Kautschukmischungen beschrieben, die Naturkautschuk, bis zu 40 phr eines modifizierten Styrol-Butadien-Copolymers, bis zu 46 phr Kieselsäure und ein Haftsystem enthalten. Reifen mit diesen Mischungen sollen sich durch verbesserte Eigenschaften, beispielsweise im Hinblick auf Treibstoffverbrauch und die Haltbarkeit, auszeichnen.

Weitere Gummierungsmischungen werden in der DE 10 2011 055966 A1 und in der EP 2 628 767 A1 beschrieben.

Der Erfindung liegt die Aufgabe zugrunde, eine Kautschukmischung für die Gummierung von textilen Festigkeitsträgern in Fahrzeugluftreifen bereitzustellen, die sich durch eine verbesserte Ermüdungsbeständigkeit bei gleichzeitig geringen Rollwiderstand bei Verwendung im Reifen auszeichnet.

Gelöst wird die Aufgabe erfindungsgemäß dadurch, dass die Gummierungsmischung
- 25 bis 55 phr (Gewichtsteile, bezogen auf 100 Gewichtsteile der gesamten Kautschuke in der Mischung) zumindest eines Polyisoprens ,
- 45 bis 75 phr zumindest eines weiteren Dienelastomers aus zumindest einem konjugierten Dien und gegebenenfalls einer oder mehrerer vinylaromatischer Verbindungen mit einem Gehalt an vinylaromatischer Verbindung von 0 bis 50 Gew.-%,
- 30 bis 90 phr zumindest einer Kieselsäure,
- zumindest ein Silankupplungsagens und
- ein Haftsystem für die Gummi-Textilhaftung enthält,
wobei das weitere Dienelastomer ein Styrol-Butadien-Copolymer ist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Die Masse aller in der Mischung vorhandenen Kautschuke addiert sich zu 100.

Durch die spezielle Kombination der Bestandteile in den angegebenen Mengen kann überraschenderweise ein deutliche Verbesserung der Ermüdungsbeständigkeit erreicht werden. Der Rollwiderstand bei Verwendung der Gummierungsmischung zur Gummierung von textilen Festigkeitsträgern im Reifen, wie z. B. der Karkasse, bleibt auf niedrigen Niveau. Gleichzeitig ist eine gute Haftung zwischen Gummi und textilem Festigkeitsträger gewährleistet, was auch zu einer guten Produkthaltbarkeit führt.

Die Gummierungsmischung enthält 25 bis 55 phr zumindest eines Polyisoprens. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung erhalten werden (synthetisches Polyisopren, IR). Zum anderen handelt es sich bei Naturkautschuk (NR) um ein solches cis-1,4 Polyisopren, der cis-1,4-Anteil im Naturkautschuk ist größer 99 Gew.-%. Unter Naturkautschuk wird Kautschuk verstanden, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann.

Es können auch unterschiedliche Polyisoprene im Verschnitt eingesetzt werden. Vorzugsweise wird als Polyisopren Naturkautschuk eingesetzt, mit welchem die besten Ergebnisse hinsichtlich der Haftung erzielt werden.

Die Gummierungsmischung enthält 45 bis 75 phr zumindest eines weiteren Dienelastomers aus zumindest einem konjugierten Dien und gegebenenfalls einer oder mehrerer vinylaromatischer Verbindungen mit einem Gehalt an vinylaromatischer Verbindung von 0 bis 50 Gew.-%. Zu den Dieneastomeren zählen alle Kautschuke mit einer ungesättigten Kohlenstoffkette, die sich zumindest teilweise von konjugierten Dienen ableiten.Es können auch mehrere weitere Dienelastomere dieser Art eingesetzt werden.

Als weiteres Dienelastomer enthält die Gummierungsmischung ein Styrol-Butadien-Copolymer. Dabei kann es sich sowohl um lösungspolymerisierten Styrol-Butadien-Kautschuk (SSBR) als auch um emulsionspolymerisierten Styrol-Butadien-Kautschuk (ESBR) mit unterschiedlichen Vinyl- und Styrolgehalten handeln, wobei auch ein Gemisch aus wenigstens einem SSBR und wenigstens einem ESBR eingesetzt werden kann.

Die weiteren Dienelastomere können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder EthoxyGruppen und/oder Epoxy-Gruppen und/oder Siloxan-Gruppen und/oder AminoGruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte Modifizierungen bzw. Funktionalisierungen in Frage. Bestandteil solcher Funktionalisierungen können Metallatome sein. Vorzugsweise ist das weitere Dienelastomer an einem Kettenende mit einer aminogruppen- und/oder ammoniumgruppen-enthaltenden Organosilylgruppe und am anderen Kettenende mit einer Aminogruppe funktionalisiert.

Um den Rollwiderstand weiter zu verbessern, hat es sich als vorteilhaft erwiesen, wenn ein Styrol-Butadien-Copolymer mit einer Glasübergangstemperatur T_{g} von weniger als -40 °C und einen Styrol-Gehalt von zumindest 20 Gew.-% eingesetzt wird. Die Bestimmung der Glasübergangstemperatur (T_{g}) der Polymere erfolgt anhand von Dynamischer Differenz-Kalorimetrie (engl. Dynamic Scanning Calorimetry, DSC gemäß DIN 53765: 1994-03 bzw. ISO 11357-2: 1999-03, Kalibrierte DSC mit Tieftemperatureinrichtung, Kalibrierung nach Gerätetyp und Herstellerangaben, Probe im Aluminiumtiegel mit Aluminiumdeckel, Abkühlung auf Temperaturen niedriger als -120 °C mit 10 °C/min). Die Bestimmung des Styrol-Gehaltes erfolgt mittels ¹³C-NMR (Lösungsmittel: Deuterochloroform CDCl₃; NMR: engl. "nuclear magnetic resonance") und Abgleich mit Daten aus der Infrarot-Spektrometrie (IR; FT-IR Spektrometer der Firma Nicolet, KBr-Fenster 25 mm Durchmesser x 5 mm, 80 mg Probe in 5 mL 1,2-Dichlorbenzol).

Neben den genannten Kautschuken, kann die Gummierungsmischung auch andere in der Kautschukindustrie übliche Kautschuke, wie beispielsweise Styrol-Isopren-Butadien-Terpolymer, Butylkautschuk, Halobutylkautschuk oder Ethylen-Propylen-Dien-Kautschuk (EPDM), enthalten, die ebenfalls modifiziert sein können.

Die Gummierungsmischung enthält 30 bis 90 phr, vorzugweise 50 bis 70 phr, zumindest einer Kieselsäure. Es können unterschiedlichste Kieselsäuren, auch im Gemisch, zum Einsatz kommen. Bevorzugt ist es, wenn eine fein verteilte, gefällte Kieselsäure verwendet wird, die eine CTAB-Zahl (gemäß ASTM D 3765) von 30 bis 350 m²/g aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil^{®} 7000 der Firma Evonik), zum Einsatz kommen.

Um die Eigenschaften im Hinblick auf den Rollwiderstand bei Verwendung im Reifen weiter zu verbessern, hat es sich als vorteilhaft erwiesen, wenn zumindest eine Kieselsäure verwendet wird, deren CTAB-Zahl (gemäß ASTM D 3765) von weniger als 120 m²/g, vorzugsweise weniger als 100 m²/g, beträgt.

Neben Kieselsäure kann die Gummierungsmischung auch andere Füllstoffe, wie Ruß, Alumosilicate, Kaolin, Kreide, Stärke, Magnesiumoxid, Titandioxid, Kautschukgele, Fasern, Kohlenstoffnanoröhrchen, Graphit, Graphene und sogenannte "carbon-silica dual-phase filler" enthalten.

Gemäß einer vorteilhaften Weiterbildung der Erfindung enthält die Gummierungsmischung 5 bis 50 phr Ruß, wobei das Verhältnis von Kieselsäure zu Ruß 1:5 bis 5:1 beträgt. Als Ruße können übliche Ruße mit einer Jodadsorptionszahl gemäß ASTM D 1510 von 30 bis 250 g/kg eingesetzt werden. Durch den gleichzeitigen Einsatz von Kieselsäure und Ruß in der Gummierungsmischung kann eine Besserung Haftung zum textilen Festigkeitsträger und eine weiter verbesserte Ermüdungsbeständigkeit erzielt werden.

Die Gummierungsmischung enthält ein Haftsystem für die Gummi-Textilhaftung in üblichen Mengen von 1 bis 10 phr. Das Haftsystem ist vorzugsweise ein Methylenakzeptor-Methylendonor-Paar. Bei dem Methylendonor kann es sich z.B. Hexamethoxymethylmelamin (HMMM) oder Hexamethylentetramin (HMT) handeln. Der Methylenakzeptor kann z. B. Resorcin, Phenol, ein Resorcin-, ein Phenol-, ein Acetonderivat oder ein Novolak-Harz sein. Während des Vulkanisationsprozesses wird aus dem Methylendonor und dem Methylenakzeptor ein Harz gebildet. Es bildet sich neben dem Schwefelnetzwerk ein zweites Netzwerk basierend auf Methylendonor und Methylenakzeptor aus, welches mit dem RFL-Dip des textilen Festigkeitsträgers in haftende Wechselwirkung tritt.

Zur Verbesserung der Verarbeitbarkeit und zur Anbindung der Kieselsäure an den Kautschuk können der Gummierungsmischung Silan-Kupplungsagenzien zugesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanatopropyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. Die Silan-Kupplungsagenzien können dabei auch als Gemisch mit Industrieruß zugesetzt werden, wie z. B. TESPT auf Ruß (Handelsname X50S der Firma Evonik). Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Des Weiteren kann die erfindungsgemäße Kautschukmischung übliche Zusatzstoffe in üblichen Gewichtsteilen enthalten. Zu diesen Zusatzstoffen zählen Weichmacher, wie z. B. Glyceride, Faktisse, Kohlenwasserstoffharze, aromatische, naphthenische oder paraffinische Mineralölweichmacher (z. B. MES (mild extraction solvate) oder TDAE (treated distillate aromatic extract)), Öle auf Basis nachwachsender Rohstoffe (wie z. B. Rapsöl, Terpenöle (z. B. Orangenöle) oder Faktisse), so genannte BTL-Öle (wie sie in der DE 10 2008 037714 A1 offenbart sind) oder flüssige Polymere (wie z. B. flüssiges Polybutadien)); Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Wachse, Klebharze, wie z. B. Kohlenwasserstoffharze und Kolophonium, und Mastikationshilfsmittel, wie z. B. 2,2'-Dibenzamidodiphenyldisulfid (DBD).

Die Vulkanisation wird in Anwesenheit von Schwefel und/oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 8 phr) der Kautschukmischung zugesetzt. Um die Haftung insbesondere zu textilen Festigkeitsträgern zu verbessern, enthält die Gummierungsmischung vorzugsweise weniger als 5 phr Schwefel.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Benzothiazyl-2-tert.-butylsulfenamid (TBBS) und Benzothiazyl-2-dicyclohexylsulfenamid (DCBS), Guanidinbeschleuniger wie z. B. N,N'-Diphenylguanidin (DPG), Dithiocarbamatbeschleuniger wie z. B. Zinkdibenzyldithiocarbamat, Disulfide, Thiophosphate. Die Beschleuniger können auch in Kombination miteinander eingesetzt werden, wobei sich synergistische Effekte ergeben können.

Auch weitere netzwerkbildende Systeme, wie z. B. Vulcuren^{®}, Duralink^{®}, Perkalink^{®} oder Systeme, wie sie in der WO 2010/049261 A2 beschrieben sind, können in der Gummierungsmischung eingesetzt werden.

Die Vulkanisationsbeschleuniger können in üblichen Mengen eingesetzt werden. Gemäß einer vorteilhaften Weiterbildung der Erfindung enthält die Gummierungsmischung als Vulkanisationsbeschleuniger 0,8 bis 1,5 phr Benzothiazyl-2-dicyclohexylsulfenamid (DCBS) und weniger als 0,5 phr andere Vulkanisationsbeschleuniger. Mit DCBS als Vulkanisationsbeschleuniger kann eine weitere Verbesserung hinsichtlich der Haftung erzielt werden.

Die Herstellung der erfindungsgemäßen Gummierungsmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet.

Die Gummierungsmischung wird in Fahrzeugluftreifen eingesetzt. Die textilen Festigkeitsträger können z. B. aus Aramid, Polyester, Polyamid, Rayon oder Hybridcorden aus diesen Materialien bestehen.

Die Gummierungsmischung kann zur Gummierung unterschiedlichster Reifenbauteile, wie dem Wulstkern, den Wulstabdeckungen, den Wulstverstärkern, dem Gürtel, der Karkasse oder den Gürtelbandagen, eingesetzt werden, aber auch für andere festigkeitsträgernahe Mischungen wie Kernreiter, Squeegee, Gürtelkantenpolster, Schulterpolster, Laufstreifenunterplatten oder andere Bodymischungen kann die Kautschukmischung verwendet werden, wobei auch mehrere Bauteile innerhalb eines Reifens mit der erfindungsgemäßen Mischung versehen werden können. Die Herstellung der erfindungsgemäßen Fahrzeugluftreifen erfolgt dabei nach dem Fachmann bekannten Verfahren.

Vorzugsweise wird die Gummierungsmischung als Karkassgummierung eingesetzt, wo die gute Ermüdungsbeständigkeit zu einer hohen Lebensdauer eines Fahrzeugluftreifens mit niedrigem Rollwiderstand führen.

Alternativ oder zusätzlich kann die Gummierungsmischung auch als Bandagengummierungsmischung eingesetzt werden, was wiederum die Lebensdauer des Fahrzeugluftreifens positiv beeinflusst.

Die Erfindung soll nun anhand der nachstehenden Tabelle näher erläutert werden.

In Tabelle 1 sind Mischungen für die Gummierung textiler Festigkeitsträger in Fahrzeugluftreifen dargestellt.

Bei den Mischungen der Tabelle 1 wurden die Polymere und Füllstoffe hinsichtlich Menge und Art variiert. Die Vergleichsmischungen sind mit V, die erfindungsgemäßen Mischungen sind mit E gekennzeichnet.

Die Mischungsherstellung erfolgte unter üblichen Bedingungen unter Herstellung einer Grundmischung und anschließend der Fertigmischung in einem Labortangentialmischer.

Aus den Mischungen wurden Prüfkörper durch 20 minütige Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur gemäß DIN ISO 7619-1
- Rückprallelastizität bei 70 °C gemäß DIN 53 512
- Maximaler Verlustfaktor tan δₘₐₓ aus dynamisch-mechanischer Messung bei 55 °C gemäß DIN 53 513, Dehnungsdurchlauf (engl. "strain sweep")

Ferner wurden mit den Mischungen der Tabelle 1 Haftversuche, so genannte Peel-Tests, gemäß ISO 36:2011 (E) sowie DIN 53 530 mit Auswertung gemäß DIN ISO 6133 an textilen Festigkeitsträgern aus Polyester ohne Alterung vorgenommen. Dazu wurden mit RFL-Dip ausgerüstete Festigkeitsträgercorde aus Polyester (1440x2 dtex) mit den unvulkanisierten Kautschukmischungen bedeckt und anschließend 10 min bei 170 °C vulkanisiert. Anschließend wurde die Kraft zum Abschälen der Mischung von den Corden bestimmt und die Bedeckung der Corde mit Mischung nach dem Abziehen optisch ermittelt (5: vollständige Bedeckung, 0: keine Bedeckung). Bei der Kraft zum Abschälen wurde der Wert der Mischung 1(V) als 100 % gesetzt; die Werte der anderen Mischungen wurden auf die Mischung 1(V) bezogen.

Auch zur Ermüdungsrissbeständigkeit wurden mit den Mischungen der Tabelle 1 Monsanto Ermüdungstests ("fatigue-to-failure"-Tests) in Anlehnung an die Methode ASTM D4482 bei 101 % Dehnung und Raumtemperatur durchgeführt. Die Ergebnisse werden in der Einheit Kilozyklen (kurz: kC) angegeben.

**Tabelle 1**

| **Bestandteile** | **Einheit** | **1(V)** | **2(V)** | **3(V)** | **4(E)** | **5(E)** |
|---|---|---|---|---|---|---|
| Naturkautschuk | phr | 50 | 100 | 50 | 50 | 50 |
| Polybutadien^{a)} | phr | - | - | 50 | - | - |
| Styrol-Butadien-Copolymer^{b)} | phr | 50 | - | - | 50 | 50 |
| Ruß N660 | phr | 65 | - | 65 | - | 32,5 |
| Kieselsäure^{c)} | phr | - | 65 | - | 65 | 32,5 |
| Weichmacher, Alterungsschutzm. | phr | 17 | 17 | 17 | 17 | 17 |
| Vulkanisationsaktivatoren | phr | 4 | 4 | 4 | 4 | 4 |
| Silankupplungsagens | phr | - | 2,5 | 2,5 | 2,5 | 1,3 |
| Methylenakzeptor^{d)} | phr | 1,6 | 1,6 | 1,6 | 1,6 | 1,6 |
| Methylendonor^{e)} | phr | 2 | 2 | 2 | 2 | 2 |
| Beschleuniger | phr | 1 | 1,9 | 1,9 | 1,9 | 1,4 |
| Schwefel | phr | 2,5 | 2,5 | 2,5 | 2,5 | 2,5 |

| **Eigenschaften** | | | | | | |
|---|---|---|---|---|---|---|
| Härte bei RT | ShoreA | 59 | 58 | 61 | 63 | 59 |
| Rückprallelast. bei 70 °C | % | 57 | 59 | 55 | 56 | 58 |
| tan δₘₐₓ bei 55 °C | - | 0,169 | 0,119 | 0,141 | 0,148 | 0,149 |
| Haftkraft (ungealtert) | % | 100 | 115 | 102 | 106 | 106 |
| Bedeckung (ungealtert) | - | 4,3 | 1,7 | 1,3 | 2,5 | 4,2 |
| Ermüdungstest | kC | 185 | 126 | 336 | 219 | 380 |

| | | | | | | |
|---|---|---|---|---|---|---|
| ^{a)} BR, Tg = -75 °C ^{b)} ESBR, T_{g} = -51 °C, Styrolgehalt 23,5 Gew.-% ^{c)} Zeosil^{®} 1085 MP, CTAB-Zahl = 80 m²/g, BET 90 m²/g, Fa. Solvay ^{d)} butylcarbamat-funktionalisiertes Phenol-Formaldehydharz ^{e)} Hexamethoxymethylmelamin 65 %ig auf Kieselsäure | | | | | | |

Bei den erfindungsgemäßen Gummierungsmischungen der Tabelle 1 ist eine deutliche Verbesserung der Ermüdungsbeständigkeit zu verzeichnen. Der Verlustfaktor tan δₘₐₓ bei 55 °C liegt auf niedrigen Niveau, was ein Indiz für einen niedrigen Rollwiderstand bei Verwendung in Fahrzeugluftreifen ist. Werden Kieselsäure und Ruß in der Mischung eingesetzt (s. Mischung 5(E)), so kann die Ermüdungsbeständigkeit nochmals deutlich verbessert werden und die Bedeckung als Maß für die haftende Verbindung von textilem Festigkeitsträger und Gummierungsmischung erreicht das Niveau einer Gummierungsmischung auf der Basis von Ruß.

## Patentansprüche

1. Fahrzeugluftreifen, der eine mit Schwefel vernetzte Gummierungsmischung für textile Festigkeitsträger, enthaltend
- 25 bis 55 phr (Gewichtsteile, bezogen auf 100 Gewichtsteile der gesamten Kautschuke in der Mischung) zumindest eines Polyisoprens ,
- 45 bis 75 phr zumindest eines weiteren Dienelastomers aus zumindest einem konjugierten Dien und gegebenenfalls einer oder mehrerer vinylaromatischer Verbindungen mit einem Gehalt an vinylaromatischer Verbindung von 0 bis 50 Gew.-%,
- 30 bis 90 phr zumindest einer Kieselsäure,
- zumindest ein Silankupplungsagens und
- ein Haftsystem für die Gummi-Textilhaftung,
aufweist, wobei das weitere Dienelastomer ein Styrol-Butadien-Copolymer ist.

2. Fahrzeugluftreifen nach Anspruch 1, **dadurch gekennzeichnet, dass** als Polyisopren Naturkautschuk eingesetzt wird.

3. Fahrzeugluftreifen nach Anspruch 1 oder 2, **dadurch gekennzeichnet, dass** ein Styrol-Butadien-Copolymer mit einer Glasübergangstemperatur T_{g} von weniger als -40 °C und einen Styrol-Gehalt von zumindest 20 Gew.-% eingesetzt wird.

4. Fahrzeugluftreifen nach zumindest einem der vorhergehenden Ansprüche, **dadurch gekennzeichnet, dass** die Gummierungsmischung 50 bis 70 phr zumindest einer Kieselsäure enthält.

5. Fahrzeugluftreifen nach zumindest einem der vorhergehenden Ansprüche, **dadurch gekennzeichnet, dass** zumindest eine Kieselsäure eine CTAB-Zahl gemäß ASTM D 3765 von weniger 120 m²/g, vorzugsweise weniger als 100 m²/g, aufweist.

6. Fahrzeugluftreifen nach zumindest einem der vorhergehenden Ansprüche, **dadurch gekennzeichnet, dass** die Gummierungsmischung 5 bis 50 phr Ruß enthält, wobei des Verhältnis von Kieselsäure zu Ruß 1:5 bis 5:1 beträgt.

7. Fahrzeugluftreifen nach zumindest einem der vorhergehenden Ansprüche, **dadurch gekennzeichnet, dass** das Haftsystem für die Gummi-Textilhaftung ein Methylenakzeptor-Methylendonor-Paar ist.

8. Fahrzeugluftreifen nach zumindest einem der vorhergehenden Ansprüche, **dadurch gekennzeichnet, dass** er eine Karkassgummierung aus der Gummierungsmischung aufweist.

9. Fahrzeugluftreifen nach zumindest einem der vorhergehenden Ansprüche, **dadurch gekennzeichnet, dass** er eine Bandagengummierung aus der Gummierungsmischung aufweist.

## Claims

1. Pneumatic vehicle tyre which comprises a sulfur-crosslinked rubberization mixture for textile strength members, containing
- 25 to 55 phr (parts by weight, based on 100 parts by weight of all rubbers in the mixture) of at least one polyisoprene,
- 45 to 75 phr of at least one further diene elastomer comprising at least one conjugated diene and optionally one or more vinyl-aromatic compounds, with a content of vinyl-aromatic compound of 0% to 50% by weight,
- 30 to 90 phr of at least one silica,
- at least one silane coupling agent and
- an adhesion system for rubber-textile adhesion,
wherein the further diene elastomer is a styrene-butadiene copolymer.

2. Pneumatic vehicle tyre according to Claim 1, **characterized in that** the polyisoprene used comprises natural rubber.

3. Pneumatic vehicle tyre according to Claim 1 or 2, **characterized in that** a styrene-butadiene copolymer having a glass transition temperature T_{g} of less than -40°C and a styrene content of at least 20% by weight is used.

4. Pneumatic vehicle tyre according to at least one of the preceding claims, **characterized in that** the rubberization mixture contains 50 to 70 phr of at least one silica.

5. Pneumatic vehicle tyre according to at least one of the preceding claims, **characterized in that** at least one silica has a CTAB number according to ASTM D 3765 of less than 120 m²/g, preferably less than 100 m²/g.

6. Pneumatic vehicle tyre according to at least one of the preceding claims, **characterized in that** the rubberization mixture contains 5 to 50 phr of carbon black, wherein the ratio of silica to carbon black is 1:5 to 5:1.

7. Pneumatic vehicle tyre according to at least one of the preceding claims, **characterized in that** the adhesion system for rubber-textile adhesion is a methylene acceptor-methylene donor pair.

8. Pneumatic vehicle tyre according to at least one of the preceding claims, **characterized in that** it comprises a carcass rubberization composed of the rubberization mixture.

9. Pneumatic vehicle tyre according to at least one of the preceding claims, **characterized in that** it comprises a bandage rubberization composed of the rubberization mixture.

## Revendications

1. Pneumatique de véhicule, comprenant un mélange de gommage réticulé au soufre pour supports de résistance textiles, contenant :
- 25 à 55 phr (parties en poids, rapportées à 100 parties en poids de la totalité des caoutchoucs dans le mélange) d'au moins un polyisoprène,
- 45 à 75 phr d'au moins un autre élastomère diénique à partir d'au moins un diène conjugué et, le cas échéant, d'un ou de plusieurs composés vinylaromatiques présentant une teneur en composé vinylaromatique de 0 à 50 % en poids,
- 30 à 90 phr d'au moins une silice,
- au moins un agent de couplage silane et
- un système d'adhésion destiné à l'adhésion caoutchouc-textile,
l'autre élastomère diénique étant un copolymère styrène-butadiène.

2. Pneumatique de véhicule selon la revendication 1, **caractérisé en ce que** du caoutchouc naturel est utilisé en tant que polyisoprène.

3. Pneumatique de véhicule selon la revendication 1 ou 2, **caractérisé en ce qu'**un copolymère styrène-butadiène présentant une température de transition vitreuse T_{g} inférieure à -40 °C et une teneur en styrène d'au moins 20 % en poids est utilisé.

4. Pneumatique de véhicule selon au moins l'une des revendications précédentes, **caractérisé en ce que** le mélange de caoutchouc contient 50 à 70 phr d'au moins une silice.

5. Pneumatique de véhicule selon au moins l'une des revendications précédentes, **caractérisé en ce qu'**au moins une silice présente un indice CTAB selon ASTM D 3765 inférieur à 120 m²/g, de préférence inférieur à 100 m²/g.

6. Pneumatique de véhicule selon au moins l'une des revendications précédentes, **caractérisé en ce que** le mélange de caoutchouc contient 5 à 50 phr de noir de carbone, le rapport entre la silice et le noir de carbone étant de 1:5 à 5:1.

7. Pneumatique de véhicule selon au moins l'une des revendications précédentes, **caractérisé en ce que** le système d'adhésion destiné à l'adhésion caoutchouc-textile est une paire accepteur de méthylène/donneur de méthylène.

8. Pneumatique de véhicule selon au moins l'une des revendications précédentes, **caractérisé en ce qu'**il présente un gommage de carcasse constitué du mélange de gommage.

9. Pneumatique de véhicule selon au moins l'une des revendications précédentes, **caractérisé en ce qu'**il présente un gommage de bandage constituée du mélange de gommage.
